# DEMANDE DE BREVET EUROPEEN

(11) **EP 1 011 011 A1**
(43) Date de publication de la demande: **21.06.2000**
(21) Numéro de dépôt: 99403174.8
(22) Date de dépôt: 16.12.1999
(51) Int. Cl.: G02F 1/225

(54) **Modulateur de type Mach-Zehnder présentant un taux d'extinction très élevé**

(30) Priorité: 17.12.1998 FR 9815948
(71) Demandeur: ALCATEL, 75008 Paris (FR)
(72) Inventeur: Burie, Jean-René, 94230 Cachan (FR); Helmers, Hakon, 94230 Cachan (FR)
(74) Mandataire: Ballot, Paul

(57) **Abrégé**

L'invention concerne un modulateur de type Mach-Zehnder dans lequel une source d'onde optique est couplée à un guide d'onde optique se séparant à travers un coupleur (2) en deux branches (B1, B2) qui se recombinent, les branches étant respectivement munies de modulateurs électro-optiques (4).

Selon l'invention, le coupleur (2) a un taux de couplage réglable, des moyens de régulation étant prévus pour le réglage dudit taux de couplage suite à l'application d'au moins un signal (V) sur l'un au moins des modulateurs électro-optiques (4) de manière à ce que les puissances optiques de sortie des branches (B1, B2) soient respectivement égales pour les conditions d'interférence destructive et pour les conditions d'interférence constructive. Ces moyens de régulation comprennent au moins une électrode de régulation (5).

L'invention s'applique principalement aux systèmes de transmission de signaux optiques.

## Description

La présente invention se rapporte à un modulateur de type Mach-Zehnder.

L'invention se situe dans le domaine des systèmes optoélectroniques utilisés pour la transmission ou le traitement optique de données numériques optiques.

Dans ces systèmes, les informations se présentent souvent sous forme de données binaires représentées par des impulsions modulant une onde porteuse optique fournie par un laser. Dans le domaine de l'amplitude, la qualité d'un signal optique est habituellement défini par deux paramètres : le rapport signal à bruit et le taux d'extinction. Le rapport signal à bruit est défini comme le rapport de la puissance optique du signal à la puissance de bruit dans une bande de longueur d'onde contenant la longueur d'onde de la porteuse du signal. Le taux d'extinction est défini comme le rapport des puissances correspondant respectivement aux niveaux haut et bas du signal.

Il existe plus particulièrement deux techniques de codage pour les sources à haut débit. Une première technique de codage consiste à réaliser un modulateur par électro-absorption. Un tel modulateur est de principe très simple. Il se compose en effet d'un guide sur lequel une tension de commande est appliquée. Cette tension déplace le pic d'absorption de la structure semi-conductrice du guide vers la longueur d'onde de travail. Le profil d'absorption dans le guide dépend donc de la tension de commande, ce qui permet de réaliser une modulation d'amplitude de l'onde traversant le guide. Néanmoins, cette technique de codage entraîne des problèmes de modulation de fréquence liés à la modulation d'amplitude.

Une seconde technique de codage d'une onde optique consiste à utiliser un modulateur de type Mach-Zehnder. Un tel modulateur est plus difficile à mettre en oeuvre mais il permet de réaliser un meilleur contrôle de la modulation de fréquence.

Un modulateur de type Mach-Zehnder est généralement réalisé dans un substrat semi-conducteur afin de faciliter son intégration avec d'autres composants actifs. Préférentiellement, le Mach-Zehnder est réalisé sur un support InP ou AsGa ou sur tout autre matériau III-V. Le Mach-Zehnder peut cependant être réalisé dans tout type de matériau semi-conducteur. Plus particulièrement, un modulateur Mach-Zehnder se présente comme une structure monolithique active avec une amplification uniforme sur tout le substrat et des sections électriquement isolées pour former les branches.

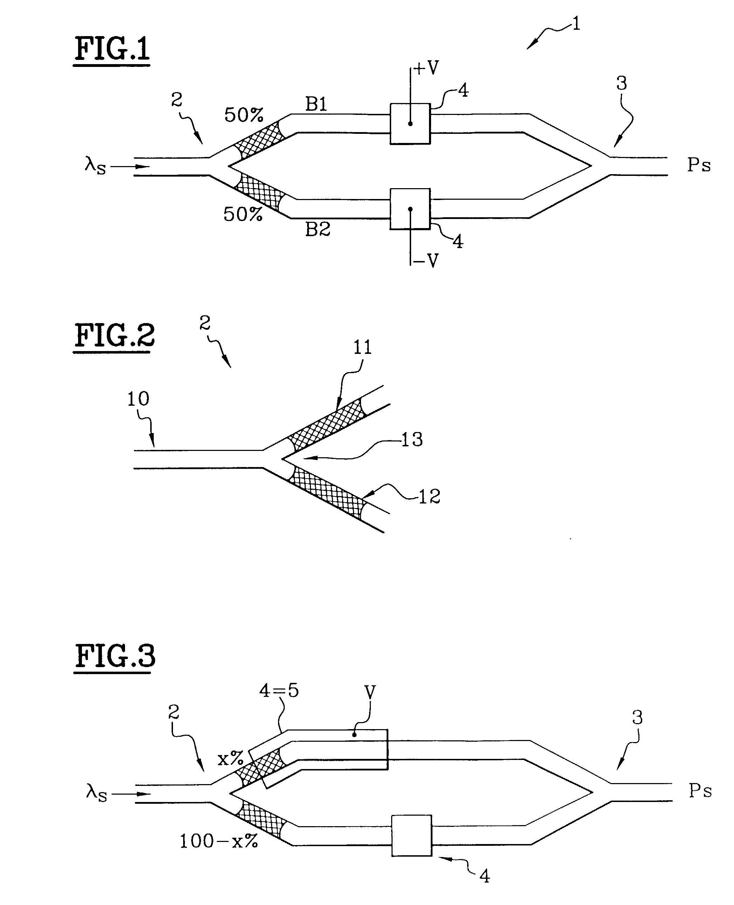

Un modulateur de type Mach-Zehnder selon l'état de la technique est illustré sur la figure 1. Un tel modulateur fonctionne essentiellement comme un interféromètre. En effet, un modulateur Mach-Zehnder se compose de deux branches véhiculant deux ondes cohérentes couplées pour former le signal de sortie. Un faisceau lumineux est séparé en deux à l'aide d'une lame séparatrice semi-réfléchissante ou à l'aide d'un coupleur électro-optique.

Une électrode est placée sur chaque branche pour moduler la phase par un effet électro-optique. L'effet électro-optique résulte d'une interaction entre l'onde optique guidée et un champ électrique qui provoque une modification de la permittivité du milieu. Cette interaction permet de moduler la phase ou l'amplitude de l'onde optique. A la sortie des branches, les signaux lumineux sont rassemblés par une seconde lame semi-réfléchissante ou par un second coupleur pour former des interférences.

La transmission sera maximale en cas d'interférence constructive, lorsque les deux branches seront en phase, et minimale en cas d'interférence destructive lorsque les branches seront en opposition de phase. Un tel modulateur permet de réaliser une modulation analogique de l'intensité lumineuse.

Plus particulièrement, les branches sont composées d'un milieu dont l'indice varie en fonction de la puissance optique véhiculée. Une tension de commande est appliquée sur une branche, appelée la branche active, et induit un changement d'indice dans cette branche afin de moduler le signal optique traversant la branche active et obtenir ainsi des interférences constructives et destructives au point de recombinaison des deux branches.

Par opposition, la branche opposée à la branche active est appelée la branche passive.

Un problème particulier résulte cependant de cette technique : le changement d'indice dans la branche active du Mach-Zehnder entraîne également une variation d'absorption qui induit une modification dans l'amplitude de la puissance de sortie de cette branche. En particulier, la puissance de sortie de la branche active ne sera pas identique à la puissance de sortie de la branche passive. Les interférences ne seront donc pas totalement destructives. Les puissances de sortie n'étant pas égales au point de recombinaison, l'interférence ne sera pas totale et le codage sera altéré.

Il a été établi que la variation d'absorption dépend de la longueur d'onde du signal optique et présente un pic pour une longueur d'onde donnée. Le modulateur Mach-Zehnder sera donc en général utilisé pour une longueur d'onde de travail éloignée du pic d'absorption.

Néanmoins, la variation d'absorption n'est jamais complètement nulle à la longueur d'onde de travail, et par conséquent les interférences ne sont jamais complètement destructives.

Les solutions apportées par l'art antérieur consistent principalement à optimiser la composition des couches semi-conductrices qui composent la structure du Mach-Zehnder afin d'optimiser la variation du taux d'indice pour une absorption donnée. Les solutions de l'art antérieur ont cependant atteint une limite physique et le problème n'est toujours pas résolu.

Le but de la présente invention est par conséquent de proposer un modulateur de type Mach-Zehnder sur InP ou sur AsGa ou sur tout autre matériau de type III-V, ou sur tout autre type de matériau semi-conducteur, pour lequel le taux d'extinction est le plus élevé possible.

La présente invention propose des moyens pour compenser l'augmentation de l'absorption dans la branche active due à l'application de la tension de commande en modifiant dynamiquement le taux de couplage à l'entrée du Mach-Zehnder.

En particulier, l'invention réalise un modulateur de type Mach-Zehnder dans lequel une source d'onde optique est couplée à un guide d'onde optique se séparant à travers un coupleur en deux branches qui se recombinent, les branches étant respectivement munies de modulateurs électro-optiques caractérisés en ce que le coupleur a un taux de couplage réglable et en ce que les moyens de régulation sont prévus pour le réglage dudit taux de couplage, suite à l'application d'au moins un signal de commande sur l'un au moins des modulateurs électro-optiques de manière à ce que les puissances optiques de sortie des branches soient respectivement égales pour les conditions d'interférence destructive et pour les conditions d'interférence constructive.

Une des branches de modulateur du type Mach-Zehnder est soumise à un signal de commande pour constituer la branche active dudit modulateur.

Selon une caractéristique, les moyens de régulation comprennent au moins une électrode de régulation sur laquelle est appliqué un signal de commande de régulation .

Selon une autre caractéristique, l'électrode de régulation est formée par l'électrode du modulateur électro-optique de la branche active du modulateur Mach-Zehnder .

Selon une autre caractéristique, le modulateur Mach-Zehnder comprend au moins deux électrodes distinctes dont l'une est l'électrode de régulation et l'autre l'électrode du modulateur électro-optique de la branche active.

Selon une autre caractéristique, l'électrode de régulation est située du côté de la branche active du modulateur Mach-Zehnder.

Selon une autre caractéristique, l'électrode de régulation est située du côté de la branche passive du modulateur Mach-Zehnder.

Selon une autre caractéristique, le coupleur est un commutateur dynamique optique (DOS) (DOS: Dynamic Optical Switch en anglais).

Selon une autre caractéristique, l'électrode de régulation est constituée par les électrodes du coupleur DOS du modulateur Mach-Zehnder.

Selon une autre caractéristique le signal de commande des modulateurs électro-optiques est une tension de commande, le signal de commande de régulation de l'électrode de régulation étant une tension de régulation.

Selon une autre caractéristique, la tension de régulation est une fonction linéaire prédéterminée de la tension de commande.

La tension de commande de l'électrode du modulateur électro-optique est utilisée pour piloter directement l'électrode de régulation ou indirectement au moyen d'un moyen de commande.

Selon une autre caractéristique, le signal de commande de l'électrode de régulation est un courant.

Selon une autre caractéristique, l'électrode de régulation est commandée par un rayon lumineux.

Le modulateur Mach-Zehnder selon l'invention présente l'avantage de permettre d'obtenir un taux d'extinction très élevé en sortie.

Ainsi, au fur et à mesure qu'une tension de commande est appliquée sur la branche active, une quantité plus importante de lumière sera injectée afin de compenser la perte d'amplitude due à l'absorption de lumière dans cette branche. Il sera ainsi possible d'obtenir des puissances de sortie égales dans les deux branches pour que l'interférence soit totale au point de recombinaison.

Un contrôle du taux de séparation à l'entrée du modulateur Mach-Zehnder permet de compenser directement la différence d'absorption dans les deux branches en laissant passer plus de lumière dans la branche active. Le taux de couplage ne sera donc pas de 50/50 comme c'était généralement le cas dans l'état de la technique, mais sera variable et dépendra directement de la tension de commande appliquée sur le modulateur électro-optique de la branche active.

Au point de recombinaison, les puissances de sortie provenant de chaque branche seront alors égales et une pleine interférence pourra avoir lieu.

De plus, le commutateur DOS préférentiellement utilisé comme coupleur à l'entrée du modulateur Mach-Zehnder présente l'avantage d'être indépendant de la longueur d'onde et de la polarisation de la source d'entrée. Un tel commutateur est en outre fabriqué à partir de matériaux semi-conducteurs qui permettent son intégration facile avec d'autres composants actifs.

Le modulateur de type Mach-Zehnder selon l'invention présente en outre l'avantage d'une mise en oeuvre simple et économique.

D'autres aspects et avantages de l'invention apparaîtront dans la suite de la description donnée à titre d'exemple illustratif et non limitatif en référence aux figures dans lesquelles:

La figure 1 illustre un modulateur de type Mach-Zehnder selon l'état de la technique.

La figure 2 illustre un coupleur DOS connu.

La figure 3 illustre un premier mode de mise en oeuvre de la présente invention.

La figure 4 illustre un second mode de mise en oeuvre de la présente invention selon une première variante.

La figure 5 illustre une deuxième variante du second mode de mise en oeuvre de la présente invention.

La figure 6 illustre une troisième variante du second mode de mise en oeuvre de la présente invention.

Les figures 7 et 8 sont des graphes représentant la puissance lumineuse à la sortie du modulateur de type Mach-Zehnder respectivement selon l'état de la technique et selon la présente invention.

La figure 1 illustre un modulateur de type Mach-Zehnder 1 tel qu'il est connu et couramment utilisé dans l'état de la technique. Une onde optique porteuse λs à la longueur d'onde de travail est appliquée à l'entrée du modulateur, puis séparée en deux branches à travers un coupleur 2 ayant une fonction de séparation de l'onde en deux parties.

Chaque branche du modulateur 1 absorbe une moitié de l'onde optique.

Des modulateurs électro-optiques 4 sont placés sur chaque branche B1 et B2, et sont commandés par un signal V afin de permettre un changement d'indice dans les branches.

Le signal de commande V entraînera un effet électro-optique qui provoquera un changement d'indice du matériau pour permettre de moduler la phase ou l'amplitude de l'onde lumineuse.

En sortie, les ondes lumineuses provenant de chaque branche sont recombinées à travers un autre coupleur 3 pour former des interférences constructives ou destructives.

Cependant, le changement d'indice provoqué par le signal de commande V appliquée sur les modulateurs électro-optiques des branches entraîne également une variation de la quantité de lumière absorbée par chaque branche, et par conséquent une variation de l'amplitude de l'onde lumineuse traversant la branche. Ainsi, lors de la recombinaison dans le coupleur de sortie 3, les deux ondes n'auront pas la même amplitude et l'interférence ne sera pas totale.

La présente invention cherche à obtenir un modulateur de type Mach-Zehnder qui permette d'obtenir un taux d'extinction très élevé en sortie.

Selon un mode de réalisation préférentiel de la présente invention, le coupleur 2 du modulateur de type Mach-Zehnder 1 est constitué par un commutateur dynamique optique (DOS: Dynamic Optical Switch en anglais) illustré sur la figure 2.

Un commutateur DOS est fabriqué dans un substrat semi-conducteur, par exemple de type InP/AsGa, qui s'intègre parfaitement avec les autres composants actifs du modulateur. Un tel commutateur présente une jonction Y avec un bras d'entrée 10 et deux bras de sortie sur lesquels sont réalisés des contacts ohmiques 11, 12 formant les électrodes du commutateur.

Les figures 3 à 6 illustrent différents modes de mise en oeuvre et différentes variantes d'un modulateur Mach-Zehnder selon la présente invention.

Le modulateur de type Mach-Zehnder selon l'invention présente un guide d'onde se séparant en deux branches Bl et B2 à travers un coupleur 2 et se recombinant à la sortie à travers un autre coupleur 3.

Chaque branche B1 et B2 comprend un modulateur électro-optique 4 commandé par un signal V.

Selon les modes de réalisation, un signal de commande V est appliqué sur une seule branche, qui constitue la branche active B1, l'autre branche B2 recevant une polarisation fixe, ou les deux branches B1 et B2 sont commandées respectivement par des signaux modulés en opposition de phase pour constituer une commande symétrique dite de "push-pull".

Selon un mode de réalisation préférentiel, le signal de commande V est constitué par une tension allant de 0 à 3 Volt par exemple.

Pour une application donnée, la tension de commande V est appliquée sur une branche, qui constitue la branche active B1. La modulation de phase se fait donc sur deux états avec un déphasage de Π. La branche active, B1, verra par conséquent une variation d'absorption, alors que la branche passive, B2, ne verra aucune variation d'absorption.

Le modulateur de type Mach-Zehnder selon l'invention présente en outre des moyens de régulation du taux de couplage entre les deux branches B1 et B2. Ces moyens de régulation sont essentiellement constitués par une électrode de régulation 5 commandée par une tension U ou un courant I. Cette électrode de régulation 5 permet d'injecter plus de lumière dans la branche active B1 afin de compenser la variation d'absorption induite par le changement d'indice provoqué par la tension de commande V.

Ainsi, dans le modulateur de type Mach-Zehnder selon l'invention, la branche active B1 absorbe x% de l'onde porteuse λs et la branche passive B2 absorbe les 100-x% restant. Le rapport d'absorption entre les branches actives et passives peut varier de 70% sur 30% à 80% sur 20%.

La quantité de lumière absorbée x% par la branche active B1 est régulée par la tension de régulation U qui commande l'électrode de régulation 5 afin de compenser la perte d'amplitude du signal dans la branche active Bl par absorption et obtenir des puissances identiques au point de recombinaison 3 des deux branches. Les interférences destructives et constructives seront alors totales et le taux d'extinction sera très élevé.

D'après un premier mode de mise en oeuvre du modulateur de type Mach-Zehnder selon l'invention, illustré sur la figure 3, une seule et même électrode est utilisée pour constituer l'électrode de régulation 5 et l'électrode du modulateur électro-optique 4. Cette unique électrode 4=5 se situe en partie sur le contact ohmique 11 du coupleur 2 et en partie sur la branche active B1 du modulateur.

Dans un tel cas, une seule tension de commande V permet d'agir sur l'électrode du modulateur électro-optique 4 afin de moduler le signal lumineux traversant la branche active B1, et sur l'électrode de régulation 5 située sur une des électrodes 11 d'un des bras du coupleur 2 pour réguler dynamiquement le taux de couplage en injectant plus de lumière dans la branche active B1.

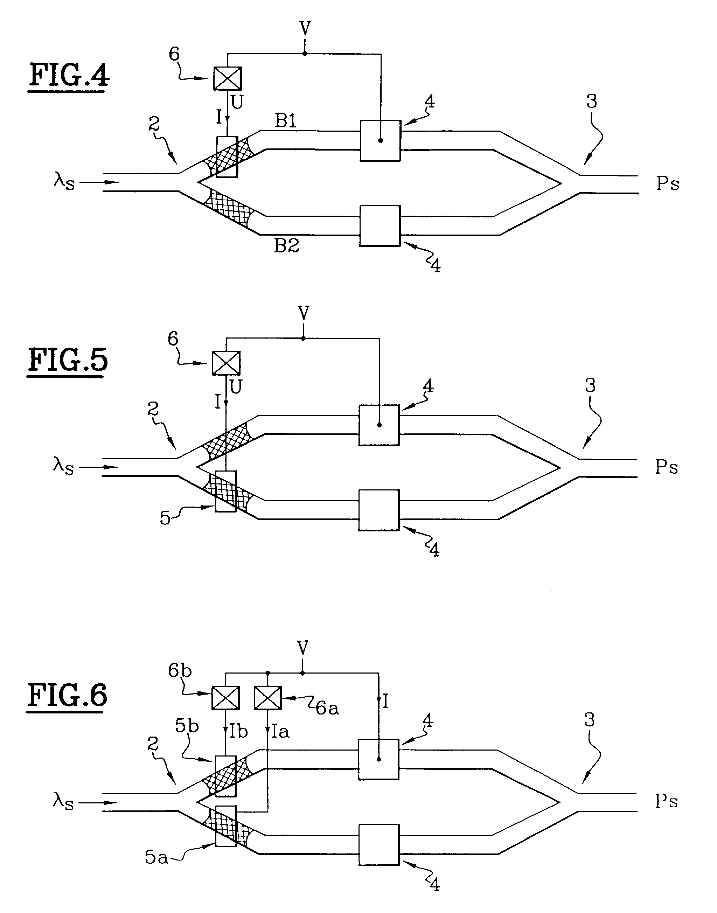

Selon un second mode de mise en oeuvre du modulateur Mach-Zehnder selon l'invention, illustré sur la figure 4, deux électrodes distinctes constituent l'une l'électrode du modulateur électro-optique 4 et l'autre, l'électrode de régulation 5. La tension de commande V agit sur l'électrode du modulateur électro-optique 4 afin de moduler le signal lumineux traversant la branche active B1, et la tension de régulation U agit sur l'électrode de régulation 5 afin d'injecter plus de lumière dans la branche active Bl pour compenser la perte d'amplitude due à l'absorption.

Préférentiellement, la tension de régulation U est une fonction linéaire de la tension de commande V. La même tension V commande donc le modulateur électro-optique 4 de la branche active et l'électrode de régulation 5 à travers un multiplicateur ou un diviseur de tension 6.

Un réglage préalable doit donc être effectué en statique afin de déterminer la loi linéaire reliant U et V afin d'obtenir les mêmes amplitudes pour les puissances de sortie des deux branches. Une fois le réglage effectué, l'application de cette tension sur l'électrode de régulation 5 permettra d'injecter autant de lumière qu'il est nécessaire pour compenser la variation d'absorption occasionnée par la tension de commande V.

Avantageusement, un tel système ne nécessite pas la mise en place d'une boucle de contrôle, puisque la relation entre U et V est linéaire et que les paramètres de la loi ont été déterminés en statique.

Selon une première variante de ce second mode de mise en oeuvre, illustrée sur la figure 4, l'électrode de régulation 5 est en contact avec l'électrode 11 du bras du DOS situé du côté de la branche active B1.

L'électrode de régulation 5 est alors conçue pour commander une augmentation du taux de couplage en faveur de la branche active B1.

Selon une deuxième variante du second mode de mise en oeuvre, illustrée sur la figure 5, l'électrode de régulation 5 est en contact avec l'électrode 12 du bras du DOS située sur la branche passive B2 du modulateur Mach-Zehnder.

L'électrode de régulation 5 est alors conçue pour commander une diminution de la quantité de lumière pénétrant dans la branche passive B2 afin de permettre une augmentation du taux de couplage en faveur de la branche active B1.

Selon une troisième variante du second mode de mise en oeuvre, illustrée sur la figure 6, l'électrode de régulation 5 est constituée par les électrodes 11 et 12 du coupleur 2 du modulateur 1.

La tension de régulation U commande alors simultanément ou alternativement les électrodes 11 et 12 du coupleur 2.

La tension de régulation U induit une augmentation de la quantité de lumière pénétrant dans la branche active B1 et/ou une diminution de la quantité de lumière pénétrant dans la branche passive B2 afin de permettre une augmentation du taux de couplage en faveur de la branohe active Bl et compenser ainsi l'absorption de lumière dans cette branche.

Préférentiellement, dans une telle variante de mise en oeuvre, un même masque peut être utilisé pour réaliser les électrodes 11 et 12 du coupleur 2 du modulateur et les électrodes de régulation 5.

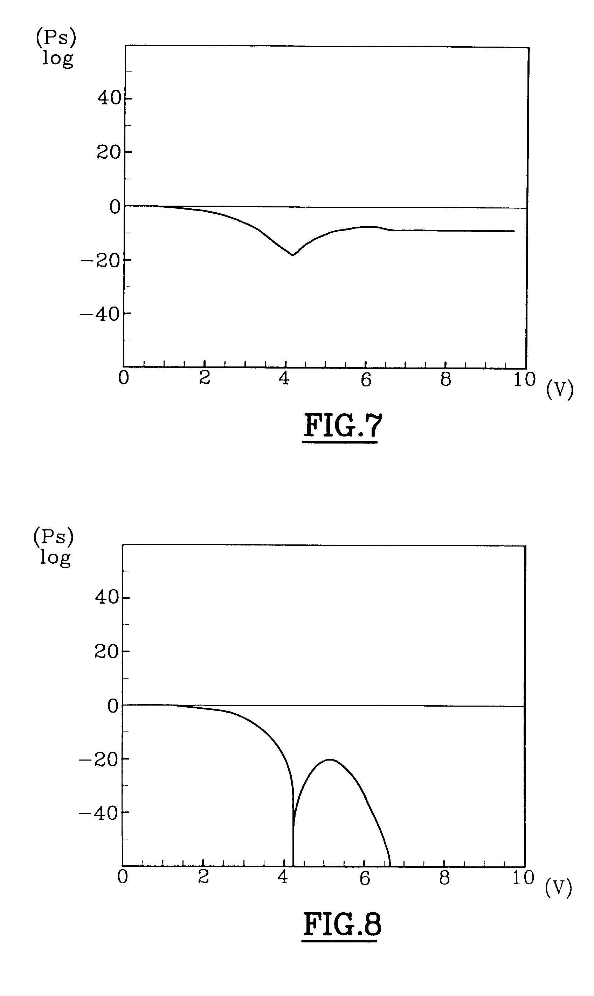

Les figures 7 et 8 présentent des graphes logarithmiques illustrant la puissance lumineuse Ps à la sortie du modulateur de type Mach-Zehnder en fonction de la tension de commande V appliquée respectivement pour un modulateur de type Mach-Zehnder selon l'état de la technique et pour un modulateur de type Mach-Zehnder selon la présente invention.

La puissance Ps représente la puissance de sortie après interférence des ondes lumineuses provenant des deux branches du modulateur de type Mach-Zehnder. Cette puissance Ps est reportée sur le graphe en dB par rapport à la valeur de sortie lorsqu'aucune tension n'est appliquée.

Ces graphes illustrent clairement que le taux d'extinction, qui représente le rapport des puissances respectivement au niveau haut et bas du signal, est beaucoup plus élevé dans le cas d'un modulateur de type Mach-Zehnder selon l'invention que celui obtenu par des modulateurs de type Mach-Zehnder de l'art antérieur.

Pour des applications données, le signal de commande V peut être constitué par un rayon lumineux provenant d'un laser par exemple, pour commander les électrodes des modulateurs électro-optiques 4 et/ou l'électrode de régulation 5.

Pour des applications données, l'électrode de régulation 5 peut être commandée par un courant I, allant de 0 à 30 mA par exemple.

## Revendications

1. Modulateur de type Mach-Zehnder dans lequel une source d'onde optique est couplée à un guide d'onde optique se séparant à travers un coupleur (2) en deux branches (B1, B2) qui se recombinent, les branches étant respectivement munies de modulateurs électro-optiques (4), caractérisé en ce que le coupleur (2) a un taux de couplage réglable et en ce que des moyens de régulation sont prévus pour le réglage dudit taux de couplage suite à l'application d'au moins un signal de commande (V) sur l'un au moins des modulateurs électro-optiques (4) de manière à ce que les puissances optiques de sortie des branches (B1, B2) soient respectivement égales pour les conditions d'interférence destructive et pour les conditions d'interférence constructive.

2. Modulateur du type Mach-Zehnder selon la revendication 1, dans lequel une des branches est soumise à un signal de commande (V) pour constituer la branche active (B1) du modulateur, caractérisé en ce que les moyens de régulation comprennent au moins une électrode de régulation (5) sur laquelle est appliqué un signal de commande de régulation (U ou I).

3. Modulateur du type Mach-Zehnder selon la revendication 2, caractérisé en ce que l'électrode de régulation (5) est formée par l'électrode du modulateur électro-optique (4) de la branche active (B1) du modulateur Mach-Zehnder (1).

4. Modulateur du type Mach-Zehnder selon la revendications 2, caractérisé en ce que le modulateur Mach-Zehnder (1) comprend au moins deux électrodes distinctes dont l'une est l'électrode de régulation (5) et l'autre l'électrode du modulateur électro-optique (4) de la branche active (B1).

5. Modulateur du type Mach-Zehnder selon la revendication 2, caractérisé en ce que l'électrode de régulation (5) est située du côté de la branche active (B1) du modulateur Mach-Zehnder (1).

6. Modulateur du type Mach-Zehnder selon la revendication 2 , caractérisé en ce que l'électrode de régulation (5) est située du côté de la branche passive (B2) du modulateur Mach-Zehnder (1).

7. Modulateur du type Mach-Zehnder selon l'une quelconque des revendications 1 à 6, caractérisé en ce que le coupleur (2) est un commutateur dynamique optique (DOS).

8. Modulateur du type Mach-Zehnder selon la revendication 7, caractérisé en ce que l'électrode de régulation (5) est constituée par les électrodes (11, 12) du coupleur DOS (2) du modulateur Mach-Zehnder (1).

9. Modulateur du type Mach-Zehnder selon la revendication 2 dans lequel le signal de commande des modulateurs électro-optiques (4) est une tension de commande (V), caractérisé en ce que le signal de commande de régulation de l'électrode de régulation (5) est une tension de régulation (U).

10. Modulateur du type Mach-Zehnder selon la revendication 9, caractérisé en ce que la tension de régulation (U) est une fonction linéaire prédéterminée de la tension de commande (V).

11. Modulateur du type Mach-Zehnder selon la revendication 10, caractérisé en ce que la tension de commande (V) de l'électrode du modulateur électro-optique (4) est utilisée pour piloter directement l'électrode de régulation (5) ou indirectement au moyen d'un moyen de commande (6).

12. Modulateur du type Mach-Zehnder selon la revendication 2, caractérisé en ce que le signal de commande de l'électrode de régulation (5) est un courant (I).

13. Modulateur du type Mach-Zehnder selon la revendication 2, caractérisé en ce que l'électrode de régulation (5) est commandée par un rayon lumineux.
